# EUROPEAN PATENT APPLICATION

(11) **EP 4 811 063 A1**
(43) Date of publication of application: **23.09.2026**
(21) Application number: 26164899.2
(22) Date of filing: 16.03.2026
(51) Int. Cl.: G05B 23/02, G05B 19/042, G05B 19/418

(54) **APPARATUS WHICH DISPLAYS GRAPH, METHOD, AND PROGRAM**

(30) Priority: 19.03.2025 JP 2025044716; 07.08.2025 JP 2025132746
(71) Applicant: Yokogawa Electric Corporation, Musashino-shi, Tokyo 180-8750 (JP)
(72) Inventor: ITOU, Rai, Musashino-shi, Tokyo, 180-8750 (JP); ARAKI, Masato, Musashino-shi, Tokyo, 180-8750 (JP); MIDORIKAWA, Minoru, Musashino-shi, Tokyo, 180-8750 (JP); ETO, Tomoaki, Musashino-shi, Tokyo, 180-8750 (JP)
(74) Representative: Hoffmann Eitle

(57) **Abstract**

Provided is an apparatus including a processor, the apparatus performing, by the processor, first calculation processing of calculating, for each of at least one parameter representing a characteristic of a target object, a degree of achievement with respect to a predetermined target value, second calculation processing of calculating a characteristic indicator value of the target object from the at least one parameter, and display processing of displaying a graph representing a transition of the characteristic indicator value and a degree of achievement of any parameter among the at least one parameter.

## Description

### BACKGROUND

### 1. TECHNICAL FIELD

The present invention relates to an apparatus which displays a graph, a method, and a program.

### 2. RELATED ART

Patent Document 1 describes "an analysis process is performed for at least any of an additive agent added to the constant temperature bath, a cleaning liquid used in the cleaning process, and an electrolyte solution used in the electrolyte detection unit to acquire an indicator for representing a property" (claim 1).

### RELATED ART DOCUMENTS

### PATENT DOCUMENTS

Patent Document 1: Japanese Patent Application Publication No. 2009-133851
Patent Document 2: Japanese Patent Application Publication No. 2024-041720

### SUMMARY

(1) According to a first aspect of the present invention, there is provided an apparatus including a processor, the apparatus performing, by the processor: first calculation processing of calculating, for each of at least one parameter representing a characteristic of a target object, a degree of achievement with respect to a predetermined target value; second calculation processing of calculating a characteristic indicator value of the target object from the at least one parameter; and display processing of displaying a graph representing a transition of the characteristic indicator value and a degree of achievement of any parameter among the at least one parameter. A degree of achievement of each parameter may be normalized. A target object may be a fluid. In the first calculation processing, the degree of achievement may be calculated at each reference interval, and in the second calculation processing, the characteristic indicator value may be calculated at each reference interval in question.
(2) In the apparatus of (1) described above, a degree of achievement of each parameter may be a value that varies according to a progress of a process on the target object and may indicate a common reference value when a corresponding parameter becomes a target value.
(3) The apparatus of (1) or (2) described above may further include a storage unit which stores at least one of data representing a past transition or data representing a predetermined ideal transition for the characteristic indicator value and a degree of achievement of each parameter, in which the display processing may include further displaying at least one of a graph representing the past transition or a graph representing the ideal transition of the characteristic indicator value and the degree of achievement of any parameter.
(4) In the apparatus of any one of (1) to (3) described above, the processor may further perform prediction processing of predicting a transition of the characteristic indicator value and a transition of the degree of achievement of any parameter, and the display processing may include further displaying a graph representing a predicted transition.
(5) In the apparatus of (4) described above, the processor may further perform acquisition processing of acquiring an operation performed in a process on the target object from a user, and the prediction processing may include predicting a transition according to acquired operation content.
(6) In the apparatus of (4) or (5) described above, the characteristic indicator value may increase as each parameter approaches a target value and decrease after each parameter has reached a target value or may decrease as each parameter approaches a target value and increase after each parameter has reached a target value, the prediction processing may include further predicting a peak timing of the characteristic indicator value, and the display processing may include further displaying the peak timing.
(7) In the apparatus of any one of (1) to (6) described above, the characteristic indicator value may increase as each parameter approaches a target value and decrease or become constant after each parameter has reached a target value or may decrease as each parameter approaches a target value and increase or become constant after each parameter has reached a target value, and the processor may further perform notification processing of notifying a user that the characteristic indicator value falls within a reference range.
(8) In the apparatus of any one of (1) to (7) described above, the characteristic indicator value may represent a degree of progress of a process on the target object.
(9) In the apparatus of (8) described above, the characteristic indicator value may increase as each parameter approaches a target value and decrease or become constant after each parameter has reached a target value or may decrease as each parameter approaches a target value and increase or become constant after each parameter has reached a target value, and in response to the characteristic indicator value falling within a reference range, the processor may further perform control processing of causing an execution facility of the process to end the process in question.
(10) According to a second aspect of the present invention, there is provided a method including calculating, for each of at least one parameter representing a characteristic of a target object, a degree of achievement with respect to a predetermined target value, calculating a characteristic indicator value of the target object from the at least one parameter, and displaying a graph representing a transition of the characteristic indicator value and a degree of achievement of any parameter among the at least one parameter.
(11) According to a third aspect of the present invention, there is provided a program which causes, when executed by a computer, the computer to perform first calculation processing of calculating, for each of at least one parameter representing a characteristic of a target object, a degree of achievement with respect to a predetermined target value, second calculation processing of calculating a characteristic indicator value of the target object from the at least one parameter, and display processing of displaying a graph representing a transition of the characteristic indicator value and a degree of achievement of any parameter among the at least one parameter.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a system 1 according to an embodiment.
Fig. 2 illustrates an assistance apparatus 3 together with an ultrasonic sensor 22, a display apparatus 4, and a device 21.
Fig. 3 illustrates an operation of the assistance apparatus 3.
Fig. 4 illustrates an example of a display screen.
Fig. 5 illustrates an assistance apparatus 3A according to a modified example together with the ultrasonic sensor 22, the display apparatus 4, and the device 21.
Fig. 6 illustrates an example of a display screen.
Fig. 7 illustrates an example of a computer 1200 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. Furthermore, not all of combinations of features described in the embodiments are essential to the solving means of the invention.

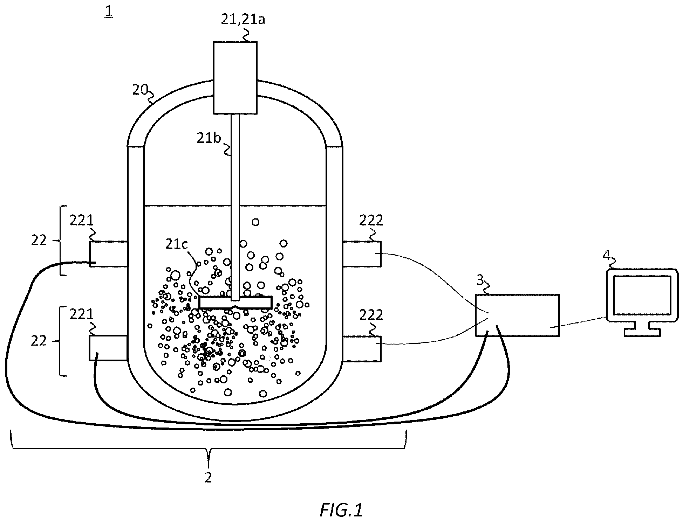

Fig. 1 illustrates a system 1 according to the present embodiment. The system 1 includes a facility 2, an assistance apparatus 3, and a display apparatus 4.

### (Facility 2)

The facility 2 performs a process (which is also referred to as a target process) on a target object. The facility 2 may be a plant or may be a compound apparatus in which a plurality of devices are combined. Examples of the plant include, in addition to industrial plants such as chemical plants and bio plants, plants that manage and control well sources such as gas fields and oil fields and surroundings thereof, plants that manage and control power generation such as hydraulic power, thermal power, and nuclear power, plants that manage and control environmental power generation such as solar power and wind power, and plants that manage and control water supplies/sewage, dams, and the like. The facility 2 has a container body 20, one or more devices 21, and one or more ultrasonic sensors 22.

### ((Container body 20))

The container body 20 contains inside a target object on which a target process is performed.

Herein, the target object according to the present embodiment may be a fluid. A fluid may be a liquid in the present embodiment, but may be a gas or may be a powder and granular material. A fluid may contain a dispersed phase such as bubbles and particles. For example, in a liquid of one substance, a solid of the one substance may be contained, or a solid or a gas of another substance may be contained. As an example, a fluid may be a metal that is at least partially molten, or may be a liquid containing a dispersed solid component.

The container body 20 as an example in the present embodiment is a tank storing a fluid but may be a pipe through which a fluid flows. A target process performed on a fluid is stirring as an example in the present embodiment, but may be mixing, dissolution, precipitation, melting, solidification, culturing, fermentation, or the like.

### ((Device 21))

Each device 21 is involved in a progress of each target process. The device 21 may be arranged inside the container body 20 or may be arranged outside the container body 20. The device 21 may be any conventionally known actuator as long as the device 21 affects the progress of the target process. For example, the device 21 may be a control device which controls at least one of physical quantities such as a pressure, a temperature, a pH, a speed, or a flow rate in the target process. The control device may be an actuator, for example, and may be a valve, a heater, a motor, a switch, or the like as an example. In the present drawing, as an example, a motor 21a is illustrated as the device 21, but another device may be further provided in the facility 2. A stirring shaft 21b may be connected to a rotational shaft of the motor 21a, and the stirring shaft 21b may be provided with a blade 21c (also referred to as a stirring blade or a fin) for stirring a fluid. The device 21 may be a control apparatus of an actuator. Control apparatus may control an operation, power consumption, or the like of an actuator.

### ((Ultrasonic sensor 22))

Each ultrasonic sensor 22 has an output unit 221 which outputs an ultrasonic wave towards a fluid and a detection unit 222 which detects an ultrasonic wave propagated through the fluid. As an example, in the present embodiment, two ultrasonic sensors 22 which are spaced apart in a vertical direction may be provided in the facility 2.

The output unit 221 and the detection unit 222 may be separately provided and arranged so as to face each other, and an ultrasonic wave output from the output unit 221 and transmitted through inside of the container body 20 may be detected by the detection unit 222. It is noted however that the output unit 221 and the detection unit 222 may be provided in an integrated manner with each other, and an ultrasonic wave output from the output unit 221 and reflected by the inside of the container body 20 may be detected by the detection unit 222.

The output unit 221 may be arranged outside the container body 20 and output an ultrasonic wave towards a fluid via a wall section of the container body 20. The detection unit 222 may be arranged outside the container body 20 and detect an ultrasonic wave via the wall section of the container body 20.

### (Assistance apparatus 3)

An assistance apparatus 3 assists quality control of a fluid serving as a target object. Although a detail will be described below, the assistance apparatus 3 may perform an assistance in the quality control based on a measurement value measured by the ultrasonic sensor 22. The assistance apparatus 3 may further acquire a measurement value by a measurement device different from the ultrasonic sensor 22, and may perform the assistance in the quality control based on a measurement value by another measurement device in addition to the measurement value measured by the ultrasonic sensor 22. The assistance apparatus 3 may output information related to a quality of a fluid or the like to a display apparatus 4.

### ((Display apparatus 4))

The display apparatus 4 displays a variety of information. The display apparatus 4 may display information supplied from the assistance apparatus 3.

### (Assistance apparatus 3)

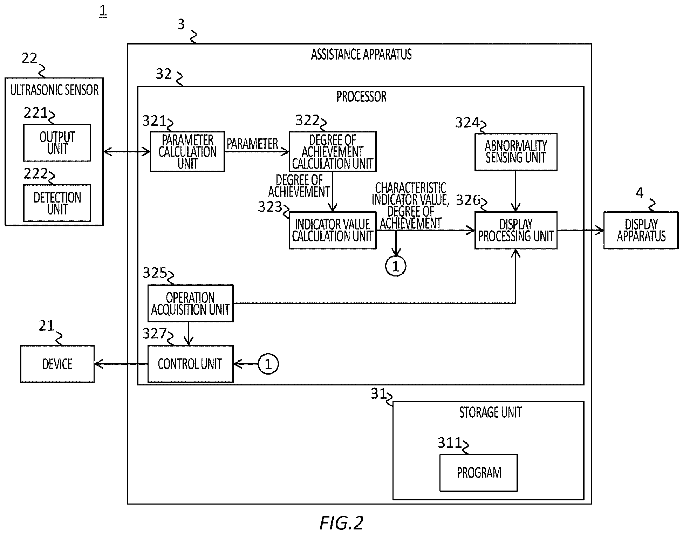

Fig. 2 illustrates the assistance apparatus 3 together with the ultrasonic sensor 22, the display apparatus 4, and the device 21. The assistance apparatus 3 has a storage unit 31 and a processor 32.

### ((Storage unit 31))

The storage unit 31 stores a variety of information. The storage unit 31 according to the present embodiment may store a program 311.

### (((Program 311)))

The program 311 causes, when executed by the processor 32, the processor 32 to perform a variety of processes. The processes performed by the processor 32 will be described below in detail.

### (Processor 32)

The processor 32 performs a variety of processing by executing the program 311. The processor 32 may achieve a function unit which performs a variety of processing by executing the program 311. The processor 32 according to the present embodiment may achieve a parameter calculation unit 321, a degree of achievement calculation unit 322, an indicator value calculation unit 323, an abnormality sensing unit 324, an operation acquisition unit 325, a display processing unit 326, and a control unit 327.

### ((Parameter calculation unit 321))

The parameter calculation unit 321 calculates a parameter representing a characteristic of a fluid in the container body 20. The parameter calculation unit 321 may calculate a parameter based on a result obtained when the ultrasonic sensor 22 is caused to send and receive an ultrasonic wave. With this configuration, the parameter representing the characteristic of the fluid in the container body 20 is measured in a non-contact manner and without obstructing the progress of the target process.

Herein, the characteristic of the fluid may be a property or state of the fluid, and the parameter may represent, for example, at least one physical quantity of a viscosity of the fluid, a temperature, a speed of sound, an acoustic pressure, or a homogeneity, or a particle size or a density of a dispersed phase in the fluid. The viscosity of the fluid may be any of a viscosity rate, a viscous resistance, a viscosity coefficient, an absolute viscosity, or the like. The density of the dispersed phase in the fluid may be a proportion of a dispersed phase contained in the fluid per unit volume, that is, a bulk density, and a density of zero may indicate that no dispersed phase is present in the fluid. The speed of sound may be a speed of the ultrasonic wave propagated through the fluid. As an example, a speed of sound C₂ of the fluid may be calculated from an expression C₂ = 2L₂/(t - 2L₁/C₁) from a propagation time period t of the ultrasonic wave, a propagation distance L₁ of the ultrasonic wave in the wall section of the container body 20, a propagation distance L₂ of the ultrasonic wave in the fluid, and a previously measured speed of sound C₁ of the wall section of the container body 20. Note that a calculation method of the speed of sound of the fluid is not limited to this and may be calculated by a Doppler method, for example. The acoustic pressure may be a fluctuation amount of a pressure caused when the ultrasonic wave propagates through the fluid. The homogeneity may refer to the fluid having same qualities at any position, and as an example, differences in physical quantities such as the speed of sound in each region of the fluid may be small. The parameter calculation unit 321 may calculate a parameter based on at least one of a positive or negative sign at a start of a waveform of the ultrasonic wave detected by the ultrasonic sensor 22, a maximum amplitude, a propagation time period, a speed of sound, or a frequency distribution through a method according to Japanese Patent Application Publication No. 2024-041720.

The parameter calculation unit 321 may calculate, based on a detection result by the detection unit 222 of the ultrasonic wave propagated through one region in the container body 20, a parameter of the fluid in the one region. The parameter calculation unit 321 may calculate a parameter for each region in the container body 20, and as an example, may calculate a density of a dispersed phase for a plurality of regions in the container body 20. Instead of this, the parameter calculation unit 321 may calculate an average value of the parameters of the fluid in the container body 20 based on a plurality of detection results of the ultrasonic wave propagated through a plurality of regions in the container body 20.

The parameter calculation unit 321 may acquire a measurement value by another measurement device (not illustrated) different from the ultrasonic sensor 22. In this case, the parameter calculation unit 321 may calculate a parameter representing a characteristic of the fluid in the container body 20 from the acquired measurement value. The parameter calculation unit 321 may calculate a parameter at each reference interval (ten seconds as an example). Each time the parameter calculation unit 321 calculates a parameter, the parameter calculation unit 321 may supply the calculated parameter to the degree of achievement calculation unit 322.

### (((Degree of achievement calculation unit 322)))

The degree of achievement calculation unit 322 calculates a degree of achievement with respect to a predetermined target value for each of at least one parameter (also referred to as a characteristic parameter set) representing a characteristic of a fluid. The degree of achievement calculation unit 322 may calculate the degree of achievement for each parameter calculated by the parameter calculation unit 321. As the degree of achievement for each parameter, the degree of achievement calculation unit 322 may calculate at least one of a first degree of achievement or a second degree of achievement, or may calculate any one of the first degree of achievement and the second degree of achievement as an example in the present embodiment. Note that a target value of each parameter may be arbitrarily set, and as an example, may be set based on a measurement value measured for a most preferable fluid among a plurality of fluids generated through trial and error.

Herein, the first degree of achievement and the second degree of achievement of each parameter may be values that vary according to a progress of the target process. Variation of the degree of achievement according to the progress of the target process may indicate that the degree of achievement performs at least one of increase or decrease according to the progress of the target process. The first degree of achievement and the second degree of achievement may be multivalued values that can respectively take three or more values. The first degree of achievement and the second degree of achievement may indicate a common reference value (100 (%) as an example in the present embodiment) when the corresponding parameter has reached the target value. As an example, the first degree of achievement and the second degree of achievement of each parameter may each be normalized regardless of differences in parameters.

The first degree of achievement may be a value calculated using a value greater than a reference value while 0 (%) is set as a lower limit value (as an example, in a range up to 140 (%)). In addition, the first degree of achievement may be a value that increases according to the progress of the target process. Therefore, in response to a further variation after the parameter has reached the target value, the first degree of achievement may increase beyond the reference value (as an example in the present embodiment, 100 (%)).

The second degree of achievement may be a value calculated in a range from 0 (%) to a reference value. In addition, the second degree of achievement may be a value that increases according to the progress of the target process and thereafter decreases. Therefore, the reference value may be an upper limit value of the second degree of achievement, and in response to a further variation after the parameter has reached the target value, the second degree of achievement may become less than the reference value. As an example, the second degree of achievement may be a value representing a closeness of the parameter to the target value. The second degree of achievement may indicate a same value as the first degree of achievement until the parameter reaches the target value. After the parameter has reached the target value, the second degree of achievement may be a value obtained by subtracting a difference between the first degree of achievement and the reference value from the reference value, and as an example, when the first degree of achievement is 120 (%), the second degree of achievement may be 80 (%).

The degree of achievement of each parameter may be a value within a reference range including the reference value when the parameter is within a target range. A reference range of a degree of achievement of each of a plurality of parameters calculated by the parameter calculation unit 321 may be a common numerical range. In the present embodiment, as an example, the reference range of the first degree of achievement may be 80 to 120 (%), and the reference range of the second degree of achievement may be 80 to 100 (%). Note that the target range of the parameter may be previously arbitrarily set for each parameter so as to include the target value, and as an example, may be set based on upper and lower limit values of the measurement values measured for a satisfactory fluid among a plurality of fluids generated through trial and error.

The degree of achievement calculation unit 322 may calculate the first degree of achievement and the second degree of achievement by mapping a range of values that the parameter may take to a range of values that the degree of achievement may take. Herein, the mapping may be associating, for each element of one set out of two sets, an element of the other set, and herein, as an example, may refer to associating each point within the range of values that the parameter may take with each point within the range of values that the degree of achievement may take. With this configuration, each value of the parameter may be converted into each value of the degree of achievement.

The degree of achievement calculation unit 322 may calculate the first degree of achievement and the second degree of achievement by mapping the range from the lower limit value in the target range of the parameter to the target value to the range from the lower limit value within the reference range of the degree of achievement to the reference value and by mapping the range from the target value in the target range of the parameter to the upper limit value to the range from the reference value within the reference range of the degree of achievement to the upper limit value. With this configuration, the value from the lower limit value in the target range of the parameter to the target value may be converted to the value from the lower limit value within the reference range of the degree of achievement to the reference value, and the value from the target value in the target range of the parameter to the upper limit value may be converted to the value from the reference value within the reference range of the degree of achievement to the upper limit value.

The degree of achievement calculation unit 322 may calculate a degree of achievement at each reference interval (as an example, ten seconds). Each time the degree of achievement calculation unit 322 calculates a degree of achievement, the degree of achievement calculation unit 322 may supply the calculated degree of achievement to the indicator value calculation unit 323.

### (((Indicator value calculation unit 323)))

The indicator value calculation unit 323 calculates a characteristic indicator value of a fluid from a characteristic parameter set. The indicator value calculation unit 323 may calculate the characteristic indicator value from the degree of achievement calculated by the degree of achievement calculation unit 322, or may calculate the characteristic indicator value by using a predetermined function. The indicator value calculation unit 323 may calculate a characteristic indicator value at each reference interval (as an example, ten seconds). Each time the indicator value calculation unit 323 calculates a characteristic indicator value, the indicator value calculation unit 323 may supply the calculated characteristic indicator value to the display processing unit 326.

Herein, the characteristic indicator value may represent a degree of progress of a target process on a fluid, or may be a value that varies over time while the target process is executed. The characteristic indicator value may be a value that increases as each parameter calculated by the parameter calculation unit 321 approaches the target value and decreases or becomes constant after each parameter has reached the target value. For example, when the target process is stirring to disperse a dispersed phase in a dispersion medium, a parameter such as a viscosity approaches the target value as the target process progresses, and after the parameter has reached the target value, at least one parameter moves away from the target value because a particle size of the dispersed phase becomes smaller than a reference particle size or the like. In this manner, the characteristic indicator value increases as each parameter approaches the target value, and the characteristic indicator value decreases when the target process excessively progresses after each parameter has reached the target value. On the other hand, in a case where the particle size of the dispersed phase is maintained after each parameter has reached the target value or the like, the characteristic indicator value becomes constant even when the target process further progresses.

The characteristic indicator value may represent a quality of the fluid on which the target process is performed, or may represent a quality completion level of the fluid generated by the target process. As an example, the characteristic indicator value may be a value according to a difference between each parameter and the target value, and may be a value that increases as the difference is smaller (that is, as the parameter is closer to the target value). The characteristic indicator value may become the reference value (in the present embodiment, as an example, 100 (%)) when each parameter becomes the target value. That is, when the first degree of achievement and the second degree of achievement of each parameter become the reference value, the characteristic indicator value may become the reference value. The reference value may be an upper limit value of the characteristic indicator value. The characteristic indicator value may become a value within the reference range when each parameter is within the target range. With this configuration, when each parameter is within the target range, the degree of achievement of each parameter and the characteristic indicator value may each become a value within the reference range. Note that when at least one parameter is not within the reference range, the characteristic indicator value may be out of the reference range. The reference range of the characteristic indicator value may be 80 to 100 (%).

The characteristic indicator value may be a value obtained by integrating the degree of achievement (as an example, the second degree of achievement) of each parameter. The characteristic indicator value may be an average value of the degrees of achievement of the respective parameters, that is, a total value obtained by dividing the degrees of achievement by the number of parameters. For example, the characteristic indicator value may be an average value of the degrees of achievement when all of the degrees of achievement of the respective parameters are within the reference range and when none of the degrees of achievement are within the reference range. The average value of the degrees of achievement of the respective parameters may be a weighted average in which weights differ among the parameters. A weighting coefficient of each parameter may be arbitrarily set based on an importance of the parameter or the like. A configuration may be adopted in which the characteristic indicator value is not an average value of the degrees of achievement when the degrees of achievement of some of parameters are within the reference range and the degrees of achievement of the rest of the parameters are out of the reference range.

For example, among a plurality of parameters, when the degrees of achievement of a subset of the parameters are within the reference range and the degrees of achievement of a remaining subset of the parameters are below the reference range, the characteristic indicator value may be a total value of a value obtained by dividing the lower limit value of the reference range of the degree of achievement of each parameter in the subset by the number of parameters and a value obtained by dividing the degree of achievement of each parameter in the remaining subset of parameters by the number of parameters. As an example, among four parameters, when second degrees of achievement T₍₂₎ₐ and T_{(2)b} of two parameters are within the reference range of 80 to 100 (%) and second degrees of achievement T_{(2)c} and T_{(2)d} of the remaining two parameters are less than 80 (%), the characteristic indicator value may be a value calculated by the characteristic indicator value = 80/4 + 80/4 + T_{(2)c}/4 + T_{(2)d}/4. Note that in a notation "degree of achievement T₍₂₎ₐ", a subscript "(2)" indicates a second degree of achievement, and "a" indicates identification information of the parameter. The second degrees of achievement T₍₂₎ₐ and T_{(2)b} may be the reference values (in the present embodiment, as an example, 100 (%)) or may not be the reference values.

Instead of this or in addition to this, when the number of parameters calculated by the parameter calculation unit 321 is N, the degrees of achievement of M (where M is 1 ≤ M < N) parameters are the reference values among the N parameters in question, and the degrees of achievement of the rest of the (N - M) parameters are below the reference range, the characteristic indicator value may be a total value of values which are obtained by multiplying the degrees of achievement of the (N - M) respective parameters that are not reference values by 1/(N - M). As an example, when N = 2 and M = 1, the characteristic indicator value may be a value of the degree of achievement of the single parameter that has not reached the reference value. When N = 3 and M = 1, the characteristic indicator value may be a value obtained by multiplying the degrees of achievement of the two parameters that have not reached the reference value by 1/2, respectively, and summing the resultant values. When N = 3 and M = 2, the characteristic indicator value may be a value of the degree of achievement of the single parameter that has not reached the reference value.

### (((Abnormality sensing unit 324)))

The abnormality sensing unit 324 senses an abnormality that occurs in the facility 2. The abnormality that occurs in the facility 2 may be an abnormality of the facility 2 itself (as an example, an abnormality of the device 21), or may be an abnormality of the target process (as an example, an abnormality of a process value). The abnormality sensing unit 324 may sense an abnormality in response to supply of an alarm signal from a user or a monitoring apparatus or the like of the facility 2. The abnormality sensing unit 324 may acquire a measurement value from one or more sensors provided in the facility 2 or may sense an abnormality based on the acquired measurement value. As an example, the abnormality sensing unit 324 may sense an abnormality in response to a measurement value being out of an allowable range. In response to sensing of an abnormality, the abnormality sensing unit 324 may supply a signal representing content of the abnormality to the display processing unit 326.

### (((Operation acquisition unit 325)))

The operation acquisition unit 325 acquires a variety of operations from a user via an input apparatus which is not illustrated in the drawings. The operation acquisition unit 325 according to the present embodiment may acquire an operation of selecting a parameter for which a trend graph described below is displayed among a plurality of parameters in the characteristic parameter set, and may supply identification information of the parameter set as the target selected by the user to the display processing unit 326. The operation acquisition unit 325 may acquire an operation performed in the target process from the user, and may supply content of the acquired operation to the display processing unit 326 and the control unit 327.

### (((Display processing unit 326)))

The display processing unit 326 displays a variety of information via the display apparatus 4.

The display processing unit 326 may display a graph (also referred to as a trend graph) which represents a transition of a degree of achievement of any parameter in a characteristic parameter set and a characteristic indicator value. The display processing unit 326 may display the trend graph based on the degree of achievement and the characteristic indicator value supplied from the degree of achievement calculation unit 322 and the indicator value calculation unit 323 at each point in time in an execution time period of a target process.

Herein, the trend graph may represent a value of the degree of achievement or the characteristic indicator value at each point in time in the execution time period of the target process, and may thereby represent a variation over time of the degree of achievement or the characteristic indicator value. The trend graph may be any of a line graph (also referred to as a line chart), a bar graph (also referred to as a bar chart), an area graph (also referred to as an area chart), or a scatter diagram. The display processing unit 326 may display the trend graph of the degree of achievement for the parameter set as the target selected by the user among the plurality of parameters in the characteristic parameter set.

The display processing unit 326 may display the reference range of the degree of achievement of each parameter and the reference range of the characteristic indicator value together with the trend graph. The display processing unit 326 may notify the user that the characteristic indicator value falls within the reference range. As an example, in response to a current value of the characteristic indicator value falling within the reference range, the display processing unit 326 may display a message representing that effect, or may display a portion corresponding to the current value in an identifiable manner such as by blinking among each point on the trend graph.

In response to supply of information representing content of an abnormality from the abnormality sensing unit 324, the display processing unit 326 may display the content of the abnormality. The display processing unit 326 may display the content of the abnormality in a region different from the trend graph of the degree of achievement and the characteristic indicator value. The display processing unit 326 may display a plot that indicates sensing of an abnormality at a point according to a sensing timing of the abnormality among each point on the trend graph. The display processing unit 326 may display different types of plots depending on content of abnormalities.

In response to supply of content of an operation on the device 21 from the operation acquisition unit 325, the display processing unit 326 may display the content of the operation in question. The display processing unit 326 may display the content of the operation in a region different from the trend graph of the degree of achievement and the characteristic indicator value. The display processing unit 326 may display a plot that indicates an operation having been performed at a point according to a timing at which the operation has been performed among each point on the trend graph. The display processing unit 326 may display different types of plots depending on content of operations.

### (((Control unit 327)))

The control unit 327 controls one or more devices 21 (as an example, actuators). The control unit 327 may control, according to operation content, the device 21 set as a target of a user operation.

The control unit 327 may cause the facility 2 to continue the target process in response to the characteristic indicator value being out of the reference range. In addition to this or instead of this, the control unit 327 may cause the facility 2 to continue the target process in response to the degree of achievement of each parameter being out of the reference range. The control unit 327 may cause the facility 2 to end the target process in response to the characteristic indicator value falling within the reference range. The control unit 327 may end the target process of the facility 2 in response to the characteristic indicator value supplied from the indicator value calculation unit 323 falling within the reference range.

In accordance with the assistance apparatus 3 described above, the degree of achievement with respect to the predetermined target value is calculated for each of parameters in the characteristic parameter set representing the characteristic of the fluid, and the characteristic indicator value of the fluid is also calculated from the parameter, and the trend graph of the characteristic indicator value and the degree of achievement of any of the parameters are displayed, which enables the user to understand the transition of each of the degree of achievement and the characteristic indicator value. Thus, the assistance apparatus 3 can perform the target process so as to reduce any of a time period, labor, a raw material, power consumption, or the like used for the target process, so that it is possible to efficiently manage the target process. In addition, because the assistance apparatus 3 can cause the target process to be executed such that the degree of achievement of the parameter and the characteristic indicator value reliably become desired values, it is possible to manage the target process with high precision.

In addition, a degree of achievement of each parameter is a value which varies according to a progress of a target process on the fluid and indicates a common value when a corresponding parameter has become a target value. Therefore, the assistance apparatus 3 enables the user to easily understand whether or not each parameter reaches the target value.

In addition, the user is notified that the characteristic indicator value has entered the reference range. Therefore, the assistance apparatus 3 enables the user to understand that the characteristic indicator value has reached the reference value and to efficiently manage the process on the fluid.

In addition, the characteristic indicator value represents the degree of progress of the target process on the fluid. Therefore, the assistance apparatus 3 enables the user to understand the progress of the target process and to efficiently manage the target process with high precision.

In addition, the facility 2 is controlled such that the target process is ended in response to the characteristic indicator value falling within the reference range. Therefore, the assistance apparatus 3 can acquire the fluid in which the characteristic indicator value is within the reference range.

### (Operation)

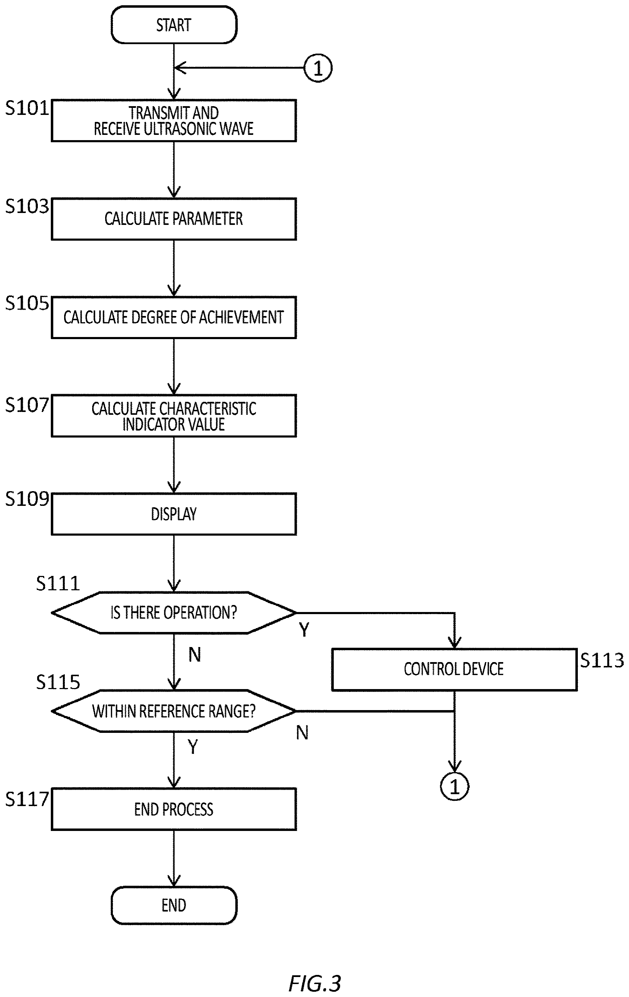

Fig. 3 illustrates an operation of the assistance apparatus 3. The assistance apparatus 3 controls the target process of the facility 2 by performing the processing in steps S101 to S117. The present operation may be performed in parallel with the target process. In addition, in parallel with the present operation, the abnormality sensing unit 324 may sense an abnormality that occurs in the facility 2.

In step S101, the parameter calculation unit 321 causes the output unit 221 and the detection unit 222 of the ultrasonic sensor 22 to transmit and receive an ultrasonic wave.

In step S103, the parameter calculation unit 321 calculates each parameter in the characteristic parameter set representing the characteristic of the fluid in the container body 20 based on a result of the transmission and reception of the ultrasonic wave. For example, the parameter calculation unit 321 may calculate at least one of a viscosity of the fluid, a temperature, a speed of sound, an acoustic pressure, or a homogeneity, or a particle size or a density of the dispersed phase in the fluid. The parameter calculation unit 321 may acquire a measurement value by another measurement device that is different from the ultrasonic sensor 22 and calculate a parameter representing the characteristic of the fluid in the container body 20 from the measurement value in question.

In step S105, the degree of achievement calculation unit 322 calculates the degree of achievement with respect to the predetermined target value for each parameter in the characteristic parameter set calculated in step S103. In the present embodiment, as an example, the degree of achievement calculation unit 322 may calculate any one of the degree of achievement in a range from 0 to 140 (%) or the second degree of achievement in a range from 0 to 100 (%) for each parameter. The degree of achievement calculated for each of a plurality of parameters may indicate a common reference value when a corresponding parameter has become the target value.

In step S107, the indicator value calculation unit 323 calculates the characteristic indicator value of the fluid from the parameter calculated in step S103. The indicator value calculation unit 323 may calculate the characteristic indicator value from the degree of achievement calculated in step S105.

In step S109, the display processing unit 326 displays the trend graph of the degree of achievement of any parameter in the characteristic parameter set and the characteristic indicator value. The reference range of the degree of achievement of each parameter and the reference range of the characteristic indicator value may be displayed in a display region of the trend graph.

Note that when the abnormality sensing unit 324 senses an abnormality in parallel with the present operation, the display processing unit 326 may display a plot representing that the abnormality is sensed at a point according to a sensing timing of the abnormality among each point on the trend graph. In addition, when a user operation is performed on the device 21 in step S111 described below, the display processing unit 326 may display a plot representing that the operation is performed at a point according to a timing at which the operation is performed among each point on the trend graph. In addition, in a state in which a trend graph is displayed, when a user operation to designate one point in time on the trend graph in question is performed, the display processing unit 326 may cause a state of the target process at the point in time in question, content of the abnormality that has occurred at the point in time in question, and content of the operation performed at the point in time in question to be displayed. The state of the target process to be displayed may be a value of each parameter in the characteristic parameter set, or may be a measurement value by one or more sensors provided in the facility 2.

Thereafter, the assistance apparatus 3 may repeat the processing in steps S101 to S109 until the process is ended. Instead of this, as an example in the present embodiment, the assistance apparatus 3 actively performs control of the process. That is, in step S111, the operation acquisition unit 325 determines whether or not a user operation on the device 21 is performed. When it is determined that a user operation is not performed (step S111; No), the processing may proceed to step S115. When it is determined that a user operation is performed (step S111; Yes), the processing may proceed to step S113.

In step S113, the control unit 327 controls, according to operation content, the device 21 set as the target of the user operation. When the processing in step S113 is ended, the processing may proceed to the above-mentioned step S101. Note that in order to perform the target process, separately from the processing in step S113, the control unit 327 may control the device 21 automatically or according to the user operation.

In step S115, the control unit 327 determines whether or not the characteristic indicator value is within the reference range. When it is determined that the characteristic indicator value is not within the reference range (step S115; No), the processing may proceed to step S101 described above. When it is determined that the characteristic indicator value is within the reference range (step S115; Yes), the processing may proceed to step S117.

In step S117, the control unit 327 ends the target process of the facility 2. With this configuration, the target process on the facility 2 is ended in response to the characteristic indicator value falling within the reference range.

### (Display example)

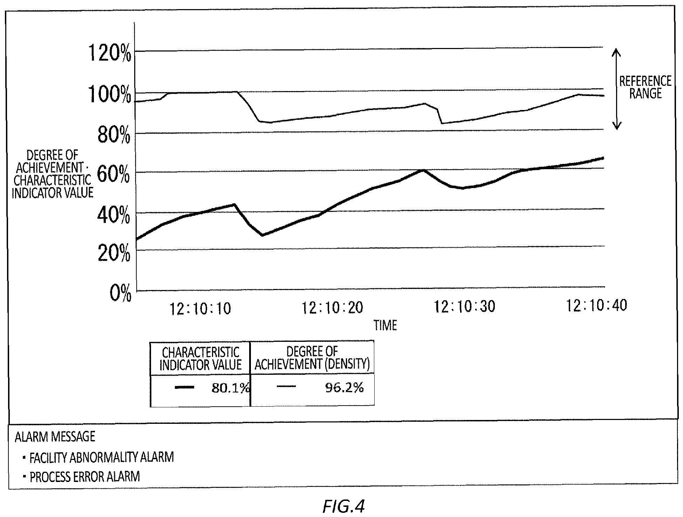

Fig. 4 illustrates an example of a display screen. The display processing unit 326 may cause the display apparatus 4 to display the display screen of Fig. 4 in the processing in step S109 described above, and may update display content for every processing in step S109. In this display screen, a trend graph of the characteristic indicator value, a trend graph of the first degree of achievement of the density serving as a parameter in the characteristic parameter set, and current values of the characteristic indicator value and the density are displayed. Note that in the present drawing, the characteristic indicator value increases along with an increase in a degree of achievement of a parameter different from the density. In addition, a display area of an alarm message is provided in this display screen, and when any of a "facility abnormality alarm" and a "process abnormality alarm" is selected, abnormalities of a selected type among abnormalities that have occurred so far are displayed in a list format by the display processing unit 326.

Note that in the above-described embodiment, the description has been provided where the processor 32 achieves the parameter calculation unit 321, the abnormality sensing unit 324, the operation acquisition unit 325, and the control unit 327, but a configuration may be adopted where the processor 32 does not achieve some of these units. When the processor 32 does not achieve the parameter calculation unit 321, a parameter measured by an external measurement apparatus may be acquired by the degree of achievement calculation unit 322. When the processor 32 does not achieve the operation acquisition unit 325, the display processing unit 326 may display a trend graph of a degree of achievement for a preset parameter among a plurality of parameters in the characteristic parameter set. In addition, when the processor 32 does not achieve the control unit 327, a configuration may be adopted where the assistance apparatus 3 does not control the target process.

In addition, the description has been provided where the indicator value calculation unit 323 calculates the characteristic indicator value from the degree of achievement calculated by the degree of achievement calculation unit 322, but may calculate the characteristic indicator value from the plurality of parameters calculated by the parameter calculation unit 321.

### (Modified example)

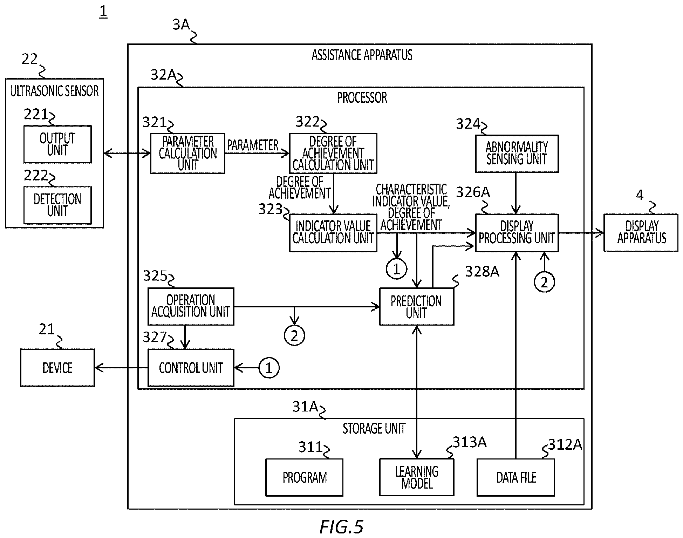

Fig. 5 illustrates an assistance apparatus 3A according to a modified example together with the ultrasonic sensor 22, the display apparatus 4, and the device 21. Note that in the modified example, identical reference numerals are used to denote elements having substantially the same configuration as those illustrated in Fig. 2, and description of them is omitted. The assistance apparatus 3A according to the present modified example has a storage unit 31A and a processor 32A.

### ((Storage unit 31A))

The storage unit 31A stores a data file 312A and a learning model 313A.

### ((Data file 312A))

The data file 312A stores at least one of data representing a past transition or data representing a predetermined ideal transition for a degree of achievement of each parameter in the characteristic parameter set and a characteristic indicator value.

The past transition may be a transition acquired in the target process in the last or previous session performed in the facility 2, or may be a transition of the degree of achievement and the characteristic indicator value calculated by the degree of achievement calculation unit 322 and the indicator value calculation unit 323. When the past transition is stored in the data file 312A, each time the degree of achievement and the characteristic indicator value are calculated, the degree of achievement calculation unit 322 and the indicator value calculation unit 323 may cause calculation results to be stored in the data file 312A together with points in time for the calculations.

The ideal transition may be set by the user and stored in the data file 312A. The ideal transition may be a transition acquired in the target process actually performed, or may be a transition acquired in the target process on a simulation.

### ((Learning model 313A))

The learning model 313A receives the characteristic indicator values at a plurality of points in time in the past in the target process that is currently performed and the degrees of achievement of each parameter in the characteristic parameter set as inputs, and outputs the characteristic indicator value at each point in time in the future and the degree of achievement of each parameter. The learning model 313A may be generated by learning processing using training data acquired in the target process performed once or more times. The training data may include the characteristic indicator value at each point in time of the target process and the degree of achievement of each parameter. The learning model 313A may be generated by using a learning algorithm appropriate to time series data, such as a recurrent neural network (as an example, LSTM or GRU). It is noted however that the learning algorithm is not limited to this, and another learning algorithm such as support vector regression (SVR) or kernel ridge regression may be used. When a learning algorithm such as support vector regression (SVR) or kernel ridge regression is used, time series data is treated as an input. Therefore, preprocessing (as an example, a sliding window method) for using data at a plurality of points in time in the past as feature variables may be applied to the training data. The learning model 313A may be generated by learning processing by the processor 32, or may be generated by learning processing by an external apparatus.

### ((Processor 32A))

The processor 32A may achieve a prediction unit 328A and a display processing unit 326A.

### ((Prediction unit 328A))

The prediction unit 328A predicts a transition of the characteristic indicator value and a transition of the degree of achievement of any parameter in the characteristic parameter set (in the present modified example, as an example, a parameter set as a target selected by the user). The prediction unit 328A according to the present modified example may perform a prediction based on the transition of the characteristic indicator value and the degree of achievement in the past.

The prediction unit 328A may calculate a regression expression of a trend graph to predict a transition of the characteristic indicator value and the degree of achievement at each point in time in the future. The prediction unit 328A may calculate a regression expression of a trend graph of characteristic indicator values from characteristic indicator values at a plurality of points in time in the past in the target process that is currently performed to predict the characteristic indicator value at each point in time in the future. The prediction unit 328A may calculate a regression expression of the trend graph of the degree of achievement from the degrees of achievement at a plurality of points in time in the past in the target process that is currently performed to predict the degree of achievement at each point in time in the future. The calculation method of the regression expression may be linear regression, may be polynomial regression, or may be other methods.

The prediction unit 328A may predict a transition of the characteristic indicator value and the degree of achievement at each point in time in the future by using the learning model 313A. The prediction unit 328A may input the characteristic indicator values and the degrees of achievement at a plurality of points in time in the past in the target process that is currently performed into the learning model 313A to acquire a transition of the characteristic indicator value and the degree of achievement at each point in time in the future from the learning model 313A.

In the present modified example, as an example, the prediction unit 328A may calculate the regression expression of the trend graph to predict the transition when the number of performance of the target process in which the transition of the characteristic indicator value and the degree of achievement is stored in the data file 312A is less than a reference number (as an example, 50 times). When the number of performance of the target process is greater than or equal to the reference number, the prediction unit 328A may predict the transition by using the learning model 313A generated by using the transition in the data file 312A for the training data.

The prediction unit 328A may further predict a peak timing of the characteristic indicator value. The prediction unit 328A may predict a peak timing from the predicted transition of the characteristic indicator value. The peak timing of the characteristic indicator value may be a timing at which the characteristic indicator value turns from increasing to decreasing. The peak timing of the characteristic indicator value may be a timing at which the characteristic indicator value becomes a local maximum, or may be a timing at which the characteristic indicator value becomes a maximum value.

The prediction unit 328A may supply information representing the predicted transition and the peak timing to the display processing unit 326A.

### ((Display processing unit 326A))

The display processing unit 326A may display a variety of information similarly as in the display processing unit 326 in the above-described embodiment.

In addition to this, the display processing unit 326A may further display the trend graph representing the past transition for the characteristic indicator value and the degree of achievement stored in the data file 312A or the trend graph representing the ideal transition. The display processing unit 326A may display the trend graph representing the past or ideal transition in step S109 described above. The display processing unit 326A may display the trend graph representing the past or ideal transition for the degree of achievement of the parameter set as the target selected by the user among each parameter in the characteristic parameter set. The display processing unit 326A may display the trend graph representing the actual transition of the characteristic indicator value and the degree of achievement and the trend graph representing the past or ideal transition in a mode distinguishable from each other. The display processing unit 326A may display a mark representing a peak with respect to a portion corresponding to the peak timing in the trend graph representing the past or ideal transition. In addition to the display of the mark or instead of the display of the mark, the display processing unit 326A may emphasize and display a peak part in the trend graph representing the past or ideal transition. As an example, the display processing unit 326A may widen a line width for drawing the graph of the peak part, may change a color of a line for drawing the graph of the peak part, or may flash the graph of the peak part. The display processing unit 326A may display a point in time corresponding to the peak timing in the trend graph representing the past or ideal transition or an elapsed time of the target process. Detection of the peak may be performed by detecting the timing at which the trend graph turns from increasing to decreasing. When the transitions in the target process performed a plurality of times are stored in a data file 312A, the display processing unit 326A may cause the trend graph representing the transition in the most recent target process to be displayed, or may cause the trend graph representing the transition previously selected by the user operation to be displayed.

The display processing unit 326A may further display the trend graph representing the transition predicted by the prediction unit 328A for the characteristic indicator value and the degree of achievement. The display processing unit 326A may display the trend graph representing the transition predicted in step S109 described above. The display processing unit 326A may display the trend graph representing the transition predicted for the degree of achievement of the parameter set as the target selected by the user among each parameter in the characteristic parameter set. The display processing unit 326A may display the trend graph representing the actual transition of the characteristic indicator value and the degree of achievement and the trend graph representing the predicted transition in a mode distinguishable from each other. When each of the trend graph representing the actual transition, the trend graph representing the predicted transition, and the trend graph representing the past or ideal transition is displayed, the display processing unit 326A may display these trend graphs in a mode distinguishable from each other.

The display processing unit 326A may further display the peak timing of the characteristic indicator value predicted by the prediction unit 328A. The display processing unit 326A may display a mark representing a peak with respect to a portion corresponding to the peak timing in the trend graph of the predicted characteristic indicator value. In addition to the display of the mark or instead of the display of the mark, the display processing unit 326A may emphasize and display the peak part in the trend graph. As an example, the display processing unit 326A may widen a line width for drawing the graph of the peak part, may change a color of a line for drawing the graph of the peak part, or may flash the graph of the peak part. The display processing unit 326A may display a point in time corresponding to the peak timing or an elapsed time of the target process.

In accordance with the assistance apparatus 3A according to the above-described modified example, the trend graph representing the past transition for the characteristic indicator value and the degree of achievement of the parameter set as the target selected by the user or the trend graph representing the predetermined ideal transition is further displayed. Therefore, the assistance apparatus 3 enables the user to understand a difference between the transition of each of the actual degree of achievement and the characteristic indicator value and at least one of the past transition or the ideal transition and to more efficiently manage the process on the fluid with high precision.

In addition, the transition of the characteristic indicator value and the transition of the degree of achievement of the parameter set as the target selected by the user are predicted, and the trend graph representing the predicted transition is further displayed. Therefore, the assistance apparatus 3 enables the user to understand the predicted transition and to more efficiently manage the process on the fluid.

In addition, the peak timing of the characteristic indicator value is further predicted to be displayed. Therefore, the assistance apparatus 3 enables the user to understand the predicted peak timing and to manage the process on the fluid with high precision.

### (Display example)

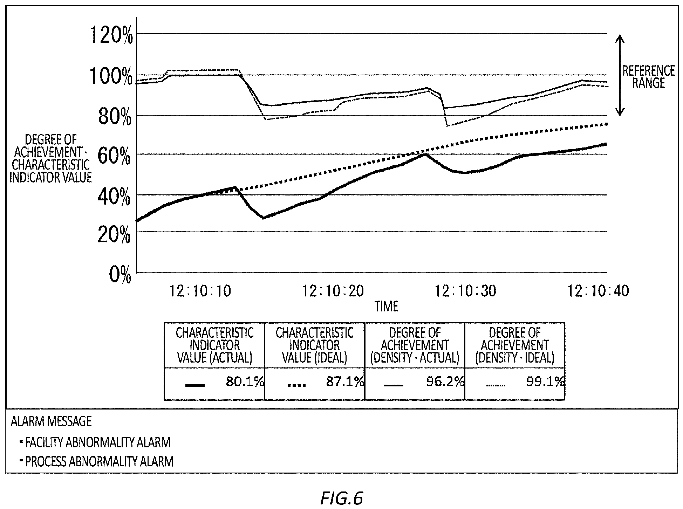

Fig. 6 illustrates an example of a display screen. The display processing unit 326A may cause the display screen of Fig. 6 in the process in step S109 described above to be displayed on the display apparatus 4, and may update the display content for every processing in step S109. On this display screen, the trend graph of the actual transition and the ideal transition of the characteristic indicator value and the trend graph of the actual and ideal transitions of the first degree of achievement of the density serving as a parameter in the characteristic parameter set are displayed. In addition, the actual current values and the ideal current values of the characteristic indicator value and the first degree of achievement are displayed. In addition, a display area of an alarm message is provided in this display screen. When any of a "facility abnormality alarm" and a "process abnormality alarm" is selected, abnormalities of a selected type among abnormalities that have occurred so far are displayed by the display processing unit 326A in a list format.

Note that in the above-described modified example, the description has been provided where the prediction unit 328A performs the prediction of the transition based on the characteristic indicator value and the transition of the degree of achievement in the past, but may perform the prediction of the transition further based on an operation performed in the target process. In this case, the operation acquisition unit 325 may acquire an operation performed in the target process (as an example, an operation on the device 21), and the prediction unit 328A may predict the transition according to content of the acquired operation. The prediction unit 328A may perform the prediction by using the learning model 313A, and may input the characteristic indicator values and the degrees of achievement at a plurality of points in time in the past in the target process that is currently performed and the operation content to the learning model 313A and acquire the transition of the characteristic indicator value and the degree of achievement at each point in time in the future from the learning model 313A. The learning model 313A may receive the characteristic indicator values at a plurality of points in time in the past in the target process that is currently performed, the degree of achievement of each parameter in the characteristic parameter set, and the operation content as inputs, and may output the characteristic indicator value at each point in time in the future and the degree of achievement of each parameter. The training data used for the learning processing of the learning model 313A may include the characteristic indicator value at each point in time of the target process, the degree of achievement of each parameter, and the operation content. When the transition according to the operation content is predicted, the assistance apparatus 3A enables the user to understand the transition predicted according to the operation content and to more efficiently manage the process on the fluid.

In addition, the description has been provided where the display processing unit 326A displays the trend graph representing the past transition or the trend graph representing the ideal transition for the characteristic indicator value and the degree of achievement, but the display processing unit 326A may display at least one of these trend graphs or may display both of the trend graphs. In this case, the display processing unit 326A may display the trend graph representing the actual transition, the trend graph representing the past transition, and the trend graph representing the ideal transition in a mode distinguishable from each other.

### (Other modified examples)

Note that in the embodiment and the modified example described above, the description has been provided where the user is notified by displaying by the display processing unit 326 or 326A that the characteristic indicator value falls within the reference range, but the user may be notified by outputting a message by an audio output unit achieved by the processor 32.

In addition, the description has been provided where the characteristic indicator value is a value that increases as each parameter in the characteristic parameter set approaches the target value and decreases or becomes constant after each parameter has reached the target value, but the characteristic indicator value may be a value that decreases as each parameter approaches the target value and increases or becomes constant after each parameter has reached the target value. In addition, a configuration may be adopted where the characteristic indicator value does not become constant after each parameter has reached the target value. When the characteristic indicator value increases as each parameter approaches the target value, the characteristic indicator value may decrease after each parameter has reached the target value. When the characteristic indicator value decreases as each parameter approaches the target value, the characteristic indicator value may increase after each parameter has reached the target value.

In addition, the description has been provided where the display processing unit 326A in the assistance apparatus 3A which has the prediction unit 328A displays the point in time corresponding to the peak timing of the characteristic indicator value predicted by the prediction unit 328A or the elapsed time and highlights and displays the peak part in the trend graph, but also in the assistance apparatus 3 which does not have the prediction unit 328A, the display processing unit 326 may detect the peak of the calculated characteristic indicator value post hoc, and when the peak is detected, the display processing unit 326 may display the point in time corresponding to the peak timing or the elapsed time or may highlight and display the peak part in the trend graph. The post hoc peak detection may be performed by detecting a timing at which the trend graph turns from increasing to decreasing.

In addition, the description has been provided where the target object is a fluid, but a solid may be used as long as the characteristic indicator value can be calculated from a plurality of parameters.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied together with computer readable instructions stored on computer readable media, and/or processors supplied together with computer readable instructions stored on computer readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations specified in the flowcharts or block diagrams. Examples of the computer readable medium may include an electronic storage medium, a magnetic storage medium, an optical storage medium, an electromagnetic storage medium, a semiconductor storage medium, or the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, or the like.

The computer readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as SMALLTALK (registered trademark), JAVA (registered trademark), C++, or the like, and a conventional procedural programming language such as a "C" programming language or a similar programming language.

The computer readable instruction may be provided for a processor or programmable circuit of a programmable data processing device, such as a computer, locally or via a local area network (LAN), a wide area network (WAN) such as the Internet, or the like to execute the computer readable instruction in order to create means for executing the operations specified in the flowcharts or block diagrams. Here, the computer may be a personal computer, or PC, a tablet computer, a smartphone, a workstation, a server computer, a general-purpose computer, a special-purpose computer, or the like, or may be a computer system to which a plurality of computers are connected. Such computer system in which the plurality of computers are connected to each other is also called a distributed computing system, and is a computer in a broad sense. In the distributed computing system, the plurality of computers collectively execute the program by each of the plurality of computers executing a part of the program, and passing data during the execution of the program among the computers as needed.

Examples of the processor include a computer processor, a central processing unit (CPU), a processing unit, a microprocessor, a digital signal processor, a controller, a microcontroller, or the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processor is responsible for executing may be determined statically by multiprocessor-aware programming.

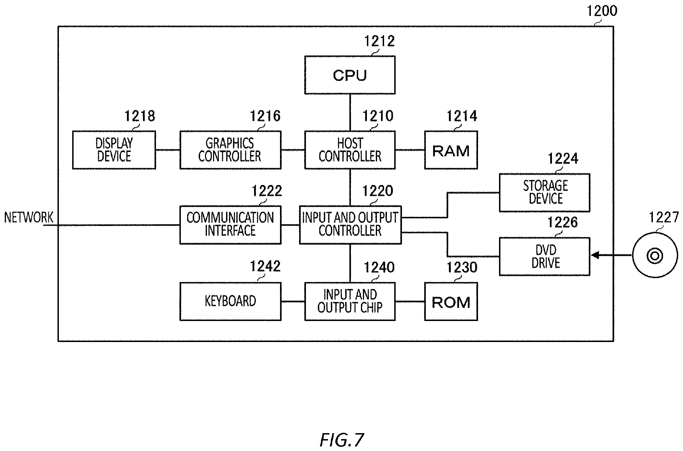

Fig. 7 illustrates an example of a computer 1200 in which a plurality of aspects of the present invention may be entirely or partially embodied. A program that is installed in the computer 1200 may cause the computer 1200 to function as operations associated with an apparatus according to the embodiment of the present invention or one or more sections in the apparatus, or may cause the computer 1200 to execute the operation or the one or more sections, and/or may cause the computer 1200 to execute processes according to the embodiment of the present invention or stages of the processes. Such a program may be executed by a CPU 1212 in order to cause the computer 1200 to execute particular operations associated with some or all of the blocks of flowcharts and block diagrams described herein.

The computer 1200 according to the present embodiment includes a CPU 1212, a RAM 1214, a graphics controller 1216, and a display apparatus 1218, which are mutually connected by a host controller 1210. The computer 1200 also includes a communication interface 1222, a storage device 1224 such as a hard disk drive, input/output units such as a DVD-ROM drive 1226 and an IC card drive, which are connected to the host controller 1210 via an input/output controller 1220. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 on a frame buffer or the like provided in the RAM 1214 or in itself, and causes the image data to be displayed on a display apparatus 1218.

The communication interface 1222 communicates with other electronic devices via a network. The storage device 1224 stores a program and data used by the CPU 1212 in the computer 1200. The DVD-ROM drive 1226 reads programs or data from a DVD-ROM 1227 and provides the programs or data to the storage device 1224 via the RAM 1214. The IC card drive reads the programs and the data from the IC card, and/or writes the programs and the data to the IC card.

The ROM 1230 stores therein a boot program or the like that is executed by the computer 1200 at the time of activation, and/or a program which depends on the hardware of the computer 1200. The input/output chip 1240 may also connect various input/output units to the input/output controller 1220 via a parallel port, a serial port, a keyboard port, a mouse port, or the like.

Programs are provided by a computer readable medium such as the DVD-ROM 1227 or the IC card. The programs are read from the computer readable medium, are installed in the storage device 1224, the RAM 1214, or the ROM 1230, which are also an example of the computer readable medium, and are executed by the CPU 1212. Information processing written in these programs is read by the computer 1200, and provides cooperation between the programs and the various types of hardware resources described above. A device or a method may be configured by realizing the operation or processing of information according to the use of the computer 1200.

For example, when communication is executed between the computer 1200 and an external device, the CPU 1212 may execute a communication program loaded onto the RAM 1214 to instruct communication processing to the communication interface 1222, based on the processing written in the communication program. The communication interface 1222, under the control of the CPU 1212, reads transmission data stored in a transmission buffering region provided in a recording medium such as the RAM 1214, the storage device 1224, the DVD-ROM 1227, or the IC card, transmits the read transmission data to the network, or writes reception data received from the network to a reception buffering region or the like provided on the recording medium.

In addition, a whole or a necessary portion a file or a database stored in the CPU 1212, the storage device 1224, the DVD-ROM drive 1226 (DVD-ROM 1227), an external recording medium such as an IC card may be read into the RAM 1214, and various types of processes may be performed on the data on the RAM 1214. The CPU 1212 then writes back the processed data to the external recording medium.

Various types of information such as various types of programs, data, tables, and databases may be stored in a recording medium and subjected to information processing. The CPU 1212 may execute various types of processing on the data read from the RAM 1214, which includes various types of operations, information processing, conditional judging, conditional branch, unconditional branch, search/replace of information, or the like, as described throughout the present disclosure and designated by an instruction sequence of programs, and writes the result back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may retrieve, out of the plurality of entries, an entry with the attribute value of the first attribute specified that meets a condition, read the attribute value of the second attribute stored in this entry, and thereby acquiring the attribute value of the second attribute associated with the first attribute satisfying a predetermined condition.

The above-described program or software module may be stored in the computer readable medium on the computer 1200 or near the computer 1200. In addition, a recording medium such as a hard disk or a RAM provided in a server system connected to a dedicated communication network or the Internet can be used as the computer readable medium, thereby providing the program to the computer 1200 via the network.

While the embodiments of the present invention have been described, the technical scope of the present invention is not limited to the above-described embodiments. It is apparent to persons skilled in the art that various alterations or improvements can be added to the above-described embodiments. It is also apparent from the claims that the embodiments added with such alterations or improvements can be included in the technical scope of the present invention.

The operations, procedures, steps, and stages or the like of each process performed by an apparatus, system, program, and method shown in the claims, specification, or drawings can be performed in any order as long as the order is not indicated by "prior to," "before," or the like and as long as the output from a previous process is not used in a later process. Even if the process flow is described using phrases such as "first" or "next" in the claims, specification, and drawings, it does not necessarily mean that the process must be performed in this order.

### EXPLANATION OF REFERENCES

1: system;
2: facility;
3, 3A: assistance apparatus;
4: display apparatus;
20: container body;
21: device;
22: ultrasonic sensor;
31, 31A: storage unit;
32, 32A: processor;
221: output unit;
222: detection unit;
311: program;
312A: data file;
313A: learning model;
321: parameter calculation unit;
322: degree of achievement calculation unit;
323: indicator value calculation unit;
324: abnormality sensing unit;
325: operation acquisition unit;
326, 326A: display processing unit;
327: control unit;
328A: prediction unit;
1200: computer;
1210: host controller;
1212: CPU;
1214: RAM;
1216: graphics controller;
1218: display apparatus;
1220: input/output controller;
1222: communication interface;
1224: storage device;
1226: DVD-ROM drive;
1227: DVD-ROM;
1230: ROM;
1240: input/output chip;
1242: keyboard.

## Claims

1. An apparatus comprising a processor, the apparatus performing, by the processor:
first calculation processing of calculating, for each of at least one parameter representing a characteristic of a target object, a degree of achievement with respect to a predetermined target value;
second calculation processing of calculating a characteristic indicator value of the target object from the at least one parameter; and
display processing of displaying a graph representing a transition of the characteristic indicator value and a degree of achievement of any parameter among the at least one parameter.

2. The apparatus according to claim 1, wherein a degree of achievement of each parameter is a value that varies according to a progress of a process on the target object and indicates a common reference value when a corresponding parameter becomes a target value.

3. The apparatus according to claim 1 or 2, further comprising:
a storage unit which stores at least one of data representing a past transition or data representing a predetermined ideal transition for the characteristic indicator value and a degree of achievement of each parameter, wherein
the display processing includes further displaying at least one of a graph representing the past transition or a graph representing the ideal transition of the characteristic indicator value and the degree of achievement of any parameter.

4. The apparatus according to any one of claims 1 to 3, wherein
the processor further performs prediction processing of predicting a transition of the characteristic indicator value and a transition of the degree of achievement of any parameter, and
the display processing includes further displaying a graph representing a predicted transition.

5. The apparatus according to claim 4, wherein
the processor further performs acquisition processing of acquiring an operation performed in a process on the target object from a user, and
the prediction processing includes predicting a transition according to acquired operation content.

6. The apparatus according to claim 4 or 5, wherein
the characteristic indicator value increases as each parameter approaches a target value and decreases after each parameter has reached a target value or decreases as each parameter approaches a target value and increases after each parameter has reached a target value,
the prediction processing includes further predicting a peak timing of the characteristic indicator value, and
the display processing includes further displaying the peak timing.

7. The apparatus according to any one of claims 1 to 6, wherein
the characteristic indicator value increases as each parameter approaches a target value and decreases or becomes constant after each parameter has reached a target value or decreases as each parameter approaches a target value and increases or becomes constant after each parameter has reached a target value, and
the processor further performs notification processing of notifying a user that the characteristic indicator value falls within a reference range.

8. The apparatus according to any one of claims 1 to 7, wherein the characteristic indicator value represents a degree of progress of a process on the target object.

9. The apparatus according to claim 8, wherein the characteristic indicator value increases as each parameter approaches a target value and decreases or becomes constant after each parameter has reached a target value or decreases as each parameter approaches a target value and increases or becomes constant after each parameter has reached a target value, and
in response to the characteristic indicator value falling within a reference range, the processor further performs control processing of causing an execution facility of the process to end the process in question.

10. A method comprising:
calculating, for each of at least one parameter representing a characteristic of a target object, a degree of achievement with respect to a predetermined target value;
calculating a characteristic indicator value of the target object from the at least one parameter; and
displaying a graph representing a transition of the characteristic indicator value and a degree of achievement of any parameter among the at least one parameter.

11. A program which causes, when executed by a computer, the computer to perform:
first calculation processing of calculating, for each of at least one parameter representing a characteristic of a target object, a degree of achievement with respect to a predetermined target value;
second calculation processing of calculating a characteristic indicator value of the target object from the at least one parameter; and
display processing of displaying a graph representing a transition of the characteristic indicator value and a degree of achievement of any parameter among the at least one parameter.
